(19) Europäisches Patentamt
European Patent Office
Office européen des brevets

(11) EP 0 956 140 B1

(12) **EUROPÄISCHE PATENTSCHRIFT**

(45) Veröffentlichungstag und Bekanntmachung des Hinweises auf die Patenterteilung:
**24.10.2001 Patentblatt 2001/43**

(51) Int Cl.$^7$: **B01D 53/14**, C10K 1/12

(21) Anmeldenummer: 97902319.9

(86) Internationale Anmeldenummer:
**PCT/EP97/00496**

(22) Anmeldetag: **04.02.1997**

(87) Internationale Veröffentlichungsnummer:
**WO 97/28885 (14.08.1997 Gazette 1997/35)**

(54) **VERFAHREN UND EINRICHTUNG ZUR H2S-ABSCHEIDUNG AUS EINEM H2S-HALTIGEN GAS**

PROCESS AND DEVICE FOR REMOVING H2S FROM AN H2S-CONTAINING GAS

PROCEDE ET DISPOSITIF DE SEPARATION DE H2S D'UN GAZ CONTENANT DU H2S

(84) Benannte Vertragsstaaten:
**DE FR GB IT NL**

(30) Priorität: **05.02.1996 DE 19603837**

(43) Veröffentlichungstag der Anmeldung:
**17.11.1999 Patentblatt 1999/46**

(73) Patentinhaber: **Deutsche Montan Technologie GmbH**
**45307 Essen (DE)**

(72) Erfinder:
• **BAER, Hartmut**
**D-45525 Hattingen (DE)**
• **BERTHOLD, Helmut**
**D-58452 Witten (DE)**

• **HOFFMANN, Andreas**
**D-48734 Reken (DE)**

(74) Vertreter: **Thiel, Christian**
**Schneiders & Behrendt**
**Rechts- und Patentanwälte**
**Huestrasse 23**
**(Westfalenbankgebäude)**
**44787 Bochum (DE)**

(56) Entgegenhaltungen:
**EP-A- 0 279 494        EP-A- 0 282 750**
**WO-A-95/21682        DE-A- 2 734 497**
**GB-A- 1 354 769        US-A- 3 880 617**

• **PATENT ABSTRACTS OF JAPAN vol. 003, no. 104 (C-057), 4.September 1979 & JP 54 084877 A (MITSUBISHI CHEM IND LTD), 6.Juli 1979,**

**Beschreibung**

Die Erfindung betrifft ein Verfahren zur H2S-Abscheidung aus einem H2Shaltigen 'Gas, z.B. aus Koksofengas, wobei Natronlauge im Gegenstrom zum H2S-haltigen Gas einem H2S-Wascher als Waschmittel aufgegeben wird. Die Erfindung betrifft weiterhin eine Einrichtung zur Durchführung des Verfahrens.

Es ist allgemeiner Stand der Technik, H2S aus einem H2S-haltigen Gas, z.B. aus Koksofengas, in einem H2S-Wascher im Gegenstrom zum Waschmittel abzuscheiden, wobei vorzugsweise ammoniakhaltige wäßrige Lösungen in den H2SWascher aufgegeben werden (AS-Kreislaufwäsche). Bei diesem Verfahren, bei dem die Waschtemperatur eine entscheidende Rolle spielt, hat es sich als nachteilig erwiesen, daß es in den heißen Sommermonaten häufig schwierig ist, die von den Aufsichtsbehörden verlangten H2S-Werte zu erreichen. Um diese Werte dennoch einhalten zu können, müssen die Waschwassermengen erhöht werden. Dies führt jedoch in der Destillationsanlage zu unererwünscht hohen Energieverbräuchen. Zur weiteren Absenkung des H2S-Gehaltes wird Natronlauge als zusätzliches Waschmittel zu den als Hauptwaschmittel verwendeten ammoniakhaltigen wäßrigen Lösungen in den Wascher aufgegeben. Die damit zu erzielende Absenkung (um ca. 0,2 g/Nm$^3$) ist jedoch oft immer noch nicht ausreichend, um die geforderten Werte zu jeder Jahreszeit sicher einzuhalten.

Aus der GB-A-1 354 769 ist ein Verfahren bekannt, nach dem der Waschvorgang nach dem Waschkolonnenprinzip gearbeitet wird. Hierbei werden Waschflüssigkeit und Gasstrom gegenläufig durch eine Kolonne mit Raschigringfüllung geführt, wobei nach Bedarf frische Lauge zugesetzt wird. Es wird bei diesem Verfahren verbrauchtes Waschmittel aus den oberen Stufen in die unterste Waschstufe eingesetzt und zudem mehrfach im Waschkreislauf gehalten. Der Wascheffekt in der untersten Stufe wird somit verringert. Nachteilig sind außerdem die eingesetzten Raschigringe, weil dadurch der Gasdurchfluß behindert wird.

Des weiteren ist ein Verfahren gemäß DE-A-27 34 497 vorgeschlagen, bei dem zur Beseitigung von Schwefelwasserstoff aus Gasen ein Natronlauge-Weichwasser-Gemisch als Waschflüssigkeit verwendet wird, wobei diese Waschflüssigkeit in einem Schwefelwasserstoffwascher eingeleitet und sodann mit dem Schwefelwasserstoffgas in Kontakt gebracht wird. Die so verbrauchte Waschflüssigkeit wird in die Mitte des Schwefelwasserstoffwaschers zur erneuten Verwendung wieder aufgegeben. Nachteilig an diesem Verfahren ist der geringe Kontakt zwischen Waschflüssigkeit und Schwefelwasserstoffgas sowie der einstufige Waschvorgang. Somit ist eine effiziente Entfernung von Schwefelwasserstoff nicht gegeben.

Der Erfindung liegt die Aufgabe zugrunde, ein Verfahren zur H2S-Abscheidung aus einem H2S-haltigen Gas, z.B. Koksofengas, und eine Einrichtung zur Durchführung des Verfahrens zu entwickeln, die die vorgenannten Nachteile der aus dem Stand der Technik bekannten Verfahren und Einrichtungen vermeiden und die die geforderten Werte sicher und kostengünstig erzielen.

Diese Aufgabe wird bei einem Verfahren zur H2S-Abscheidung aus einem H2S-haltigen Gas, zum Beispiel aus Koksofengas, wobei Natronlauge in Gegenstrom zu H2S-haltigen Gas einem H2S-Wascher als Waschmittel aufgegeben wird, wobei das Waschmittelgemisch in unterschiedlichen Konzentrationen in mehrere übereinander angeordnete Reaktionsstrecken des H2S-Waschers jeweils seitlich eingeführt, von oben eingedüst und chemisch umgesetzt wird und unterhalb jeder Reaktionsstrecke mit H2S-beladenes Waschmittel mit jeweils unterschiedlicher Konzentration aufgefangen und seitlich abgezogen wird, und wobei das Waschmittel mit niedriger und mittlerer H2S-Anreicherung mehrfach in den Kreislauf zurückgeführt wird, von den im Kennzeichen des Patentanspruches 1 niedergelegten Merkmalen dadurch gelöst wird, daß die Natronlauge mit Weichwasser gemischt wird, daß im oberen Teil der Reaktionsstrecken Sprüh- und Düsenebenen mit Vollkegelsprühdüsen angeordnet sind und im unteren Teil leicht benetzbare Streckmetalleinbauten angebracht sind und daß das Waschmittel mit hoher H2S-Anreicherung an eine nachgeschaltete Destillationseinrichtung abgegeben wird. Es ist überraschend in Betriebsversuchen gelungen, durch Variation der Waschstufen und durch mehrfache Nutzung der eingesetzten Natronlauge den Grad der H2S-Entfemung beliebig einzustellen. Die jeweiligen behördlichen Anforderungen können somit erfüllt werden. Durch die Verwendung der Vollkegelsprühdüsen kann nämlich der gesamte Querschnitt des Waschers sehr gleichmäßig mit niedrigen Natronlaugenmengen in der Sprüh- und Düsenebene bedüst werden. Die darunter angeordnete Streckenmetalleinbauten werden somit optimal benetzt, wodurch die chemische Umsetzung der Natronlauge mit dem H2S gefördert wird. Somit führt die optimale Ausnutzung des erfindungsgemäßen Verfahrens einerseits zu hohe Umsetzungsgrade mit kleinen Natronlaugenmengen, andererseits ermöglicht das erfindungsgemäße Verfahren eine Reduzierung der Waschwassermengen und den dadurch resultierenden kostensenkenden Energieeinsparungen. Die vorliegende Erfindung kann auch in Altanlagen eingesetzt werden, so daß ihr eine grundsätzliche Bedeutung zukommt.

Gemäß einer vorzugsweisen Ausgestaltung kann, wie in Unteranspruch 2 aufgeführt ist, H2S aus Koksofengas abgeschieden werden.

Gemäß Unteranspruch 3 empfiehlt es sich, das Waschmitteigemisch dem H2S-Wascher aus einem Natronlauge-Weichwasser-Mischtank zuzuführen, der aus einem Natronlauge-Vorratsbehälter mit der Natronlauge und aus einer Weichwasser-Leitung mit dem Weichwasser beschickt wind.

Gemäß Unteranspruch 4 kann der H2S-Wascher zweckmäßig über Weichwasserleitungen unmittelbar mit Weichwasser beschickt werden, wenn die Natronlauge in konzentrierter Form vorliegt und verdünnt werden soll.

Wie in Unteranspruch 5 dargestellt ist, empfiehlt es sich, das gereinigte Gas in einer oben im H2S-Wascher oberhalb der oberen Rektionsstrecke angeordneten Entwässerungsstufe von mitgerissenen Wassertropfen zu befreien.

Schließlich kann es sich gemäß Unteranspruch 6 empfehlen, daß das hoch mit H2S beladene Waschmittel in einer unten im H2S-Wascher unterhalb der Reaktionsstrecke angeordneten Waschmittel-Sammelstufe mit WaschmittelSammelkammer umgewälzt und angereichert wird. Durch die Sumpfumwälzung kann in der Waschmittel-Sammelstufe eine große Menge angereicherter Natronlauge im Kreislauf gefahren werde, wodurch auch noch deren Restalkalität genutzt und die H2S-Entfemung weiter gesteigert werden kann.

Nach Unteranspruch 7 ist es außerdem zweckmäßig, daß das beladene Waschmittel aus den Reaktionsstrecken über nachgeschaltete gasdurchlässige Kaminabzugsböden aus dem H2S-Wascher abgezogen und in den Kreislauf zurückgeführt wird, um die Mehrfachnutzung der Natronlauge zu ermöglichen.

Schließlich ist es gemäß Unteranspruch 8 zu empfehlen, daß die Flüssigkeitsströme der Natronlauge, des Weichwassers und der Natronlaugen-Weichwasser-Gemische sowie der beladenen Waschmittel und die Gasströme der H2S-beladenen und der von H2S gereinigten Gase mittels Meßgeräten nach Mengen, Eigenschaften und Zusammensetzungen ermittelt werden und je nach Befund über Regelkreise, geregelt und über Armaturen, Pumpen und Leitungen in die Gasbzw. Waschmittel-Ströme oder -Kreisläufe eingeschleust bzw. zurückgeführt oder daraus ausgeschleust werden. Gemäß Anspruch 9 wird zur H2S-Abscheidung aus einem H2S-haltigen Gas, wobei Natronlauge im Gegenstrom zum H2S-haltigen Gas einem H2S-Wascher als Waschmedium aufgegeben wird, wobei der H2S-Wascher aus mehreren übereinander angeordneten Reaktionsstrecken besteht, in die die Waschmittel jeweils seitlich eingeführt und von oben eingedüst und chemisch mit dem H2S-haltigen Gasen umgesetzt werden, eine Einrichtung empfohlen, bei der dem H2S-Wascher zur Zuführung von Natronlauge, Weichwasser oder Natronlauge-Weichwasser-Gemischen ein Natroniauge-Weichwasser-Mischtank und letzterem ein Natronlaugevorratsbehälter sowie eine Weichwasserleitung vorgeschaltet sind, und unterhalb der Reaktionsstrecken gasdurchlässige Kaminabzugsböden zum Abziehen der H2S-beladenen Waschmittel angeordnet sind, im H2S-Wascher oberhalb der Reaktionsstrecke ein Tropfenabscheider als Entwässerungsstufe vorgeschaltet ist und unterhalb der Reaktionsstrecke eine Waschmittel-Sammelstufe mit einer Waschmittelsammelkammer nachgeschaltet ist, und daß im oberen Teil der Reaktionsstrecken Sprüh- und Düsenebenen mit Vollkegelsprühdüsen für die Waschmittelverteilung angeordnet sind und im unteren Teil leicht benetzbare Streckenmetalleinbauten angebracht sind.

Es ist außerdem gemäß Unteranspruch 10 bei der Einrichtung empfehlenswert, daß in den Flüssigkeitsströmen der Natronlauge, des Weichwassers und der Natronlaugen-Weichwasser-Gemische sowie der beladenen Waschmittel und in den Gasströmen der H2S-beladenen und der von H2S gereinigten Gase Meßgeräte angeordnet sind, um Mengen, Eigenschaften und Zusammensetzungen zu ermitteln. Es ist schließlich gemäß Unteranspruch 11 bei der Einrichtung empfehlenswert, daß in den Flüssigkeitsströmen der Natronlauge, des Weichwassers und der Natronlaugen-Weichwasser-Gemische sowie der beladenen Waschmittel und in den Gasströmen der H2S-beiadenen und der von H2S gereinigten Gase Regelkreise, Armaturen, Pumpen und Leitungen vorgesehen sind, um die Gas- bzw. Waschmittel-Ströme oder -Kreisläufe zu regeln und aufzuteilen sowie zu transportieren. Die Erfindung wird nachfolgend anhand der Zeichnungsfiguren und eines Beispiels näher erläutert, wobei weitere Ausgestaltungen und Vorteile des Verfahrens zur H2S-Abscheidung aus einem H2S-haltigen Gas, z.B. Koksofengas, und der Einrichtung zur Durchführung des Verfahrens aufgeführt sind. Es zeigen:

Figur 1  einen H2S-Wascher gemäß der Erfindung in einem schematischen Längsschnitt und

Figur 2  den Gegenstand der Figur 1 in einem schematischen Verfahrens-Fließdiagramm.

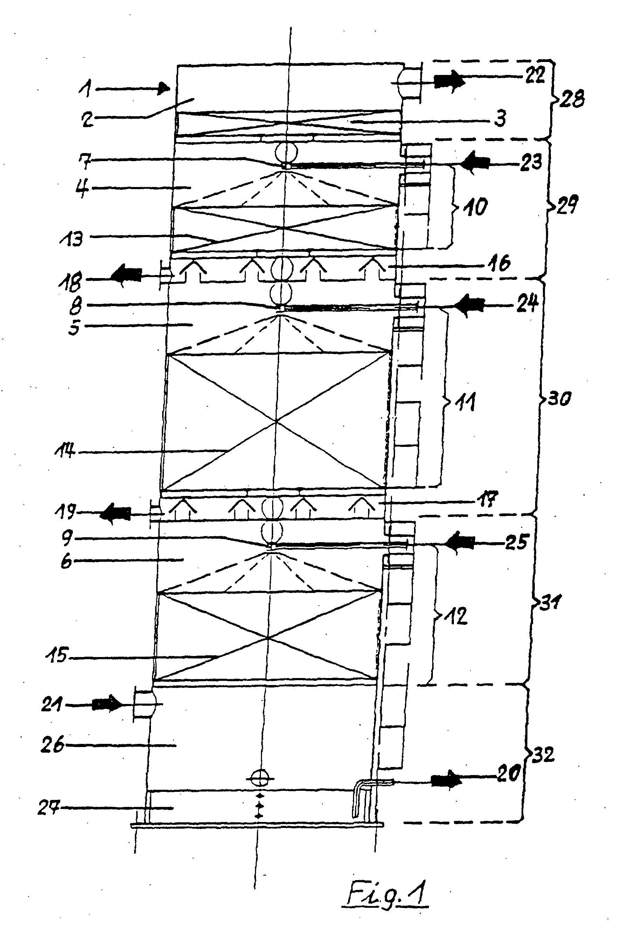

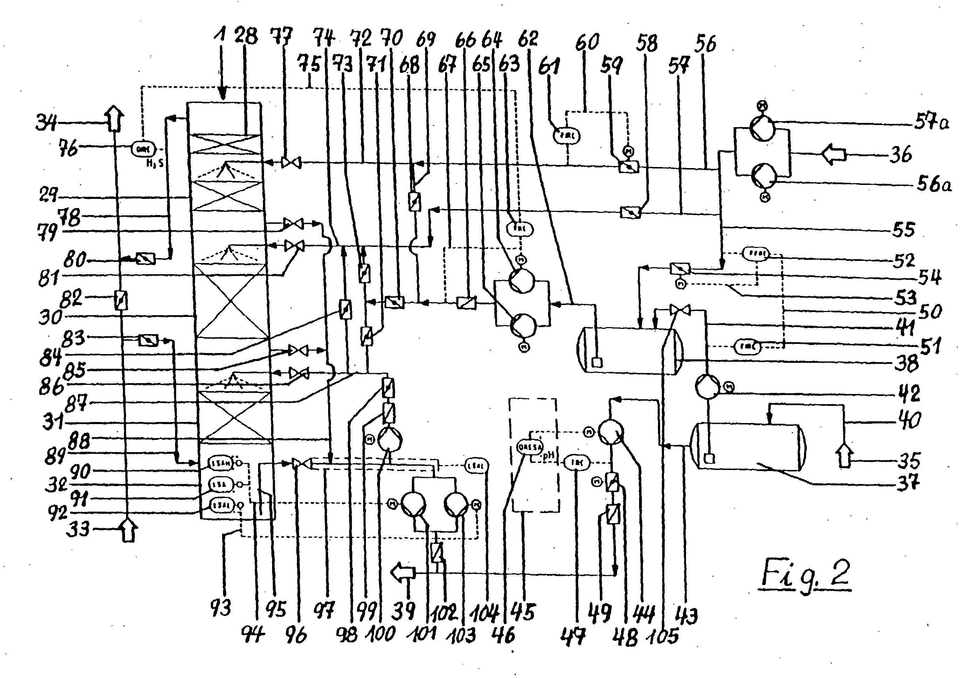

In den Figuren 1 und 2 ist ein H2S-Wascher 1 dargestellt, bei dem zur H2S-Abscheidung aus einem H2S-haltigen Gas letzteres gemäß Aufgabepfeil 21 einem Aufgaberaum 26 im unteren Teil des H2S-Waschers 1 zugeführt wird. Das H2S-haltige Gas durchströmt den H2S-Wascher 1 zur H2S-Abscheidung von unten nach oben und gelangt im obereren Teil in einen Abzugsraum 2 für gereinigtes as, aus dem letzteres gemäß Abzugspfeil 23 zur Verwendung, z.B. als Unterfeuerungsgas, abgeführt wird. Erfindungsgemäß wird im H2S-Wascher 1 Natronlauge als Waschmittel verwendet, das in mehreren, im Beispiel drei verschiedenen Waschmittelströmen gleichzeitig mehrere, im Beispiel drei übereinander angeordnete H2S-Auswaschstufen 29; 30; 31 im Gegenstrom zum aufsteigenden H2S-haltigen Gas von oben nach unten durchläuft. In jeder H2S-Auswaschstufe ist jeweils eine Reaktionsstrecke 10 bzw. 11 bzw. 12 enthalten, in deren oberen Bereich das Waschmittel seitlich eingeführt wird, wie Aufgabepfeile 23 für eine obere, 24 für eine mittlere und 25 für eine untere Waschmittel-Aufgabe zeigen. Die Natronlauge kann allein oder mit Weichwasser gemischt eingespeist werden, d. h. es können somit Waschmittelgemische mit unterschiedlichen Konzentrationen gebildet werden. Im oberen Teil der Reaktionsstrecken 10, 11, 12 sind mittig Vollkegelsprühdüsen 7, 8, 9 angebracht, die das Waschmittel von oben in Sprüh- und Düsenebenen 4, 5, 6 eindüsen, das mit dem H2S kontaktiert. Anschließend gelangt das über den gesamten Querschnitt fein verteilte Waschmittel im unteren Teil der

Reaktionsstrecken 10, 11, 12 in leicht benetzbare Streckmetalleinbauten 13, 14, 15, wo das Waschmittel weiter mit dem H2S chemisch umgesetzt wird.

Unterhalb jeder Reaktionsstrecke 10, 11, 12 wird das mit H2S beladene Waschmittel getrennt aufgefangen und seitlich abgezogen. Dabei wird ein Waschmittel mit niedriger und mittlerer H2S-Anreicherung mehrfach in den Kreislauf zurückgeführt. Ein Waschmittel mit hoher H2S-Anreicherung wird an eine nachgeschaltete Destillationseinrichtung abgegeben, wie Pfeil 39 (Figur 2) zeigt. Es kann aber auch in einer unten im H2S-Wascher 1 unterhalb der Reaktionsstrecke 12 angeordneten Waschmittel-Sammeikammer 27 einer Waschmittel-Sammeistufe 32 gesammelt, umgewälzt und weiter angereichert werden, solange noch eine Restalkalität in dem beladenen Waschmittel enthalten ist.

Waschmittelgemisch kann, wie Figur 2 zeigt, dem H2S-Wascher 1 aus einem Natronlauge-Weichwasser-Mischtank 38 zugeführt werden, der aus einem Natronlauge-Vorratsbehälter 37 mit der Natronlauge und aus einer Weichwasser-Leitung 55 mit dem Weichwasser beschickt wird.

Der H2S-Wascher 1 kann aber auch über Weichwasser-Leitungen 56, 57 unmittelbar mit Weichwasser beschickt werden, wenn dies erforderlich ist, um bei Bedarf dort eingesetzte konzentrierte Natronlauge zu verdünnen.

Das gereinigte Gas kann in einer oben im H2S-Wascher 1 oberhalb der oberen Reaktionsstrecke 10 angeordneten Entwässerungsstufe 28 in einem Tropfenabscheider 3 entwässert werden, bevor es einer Weiterverwendung zugeführt wird.

Mit H2S beladenes Waschmittel aus den Reaktionsstrecken 10, 11 wird über darunter angeordnete gasdurchlässige Kaminabzugsböden 16, 17 mittels seitlich angebrachter Waschmittelabzüge 18, 19 aus dem H2S- Wascher 1 abgezogen und in der Regel mehrmals in den Kreislauf zurückgeführt. Mit H2S beladenes Waschmittel aus der Reaktionsstrecke 12 gelangt zunächst in die bereits erwähnte Waschmittel-Sammeikammer 27, aus der es mittels Waschmittelabzug 20 seitlich abgezogen werden kann, um es entweder in den Kreislauf zurückzuführen, solange es noch über Restalkalität verfügt, oder es andernfalls in die nachgeschaltete Destillationseinrichtung abzugeben.

In Figur 2 sind die Flüssigkeitsströme der Natronlauge, des Weichwassers und der Natronlaugen-Weichwasser-Gemische sowie der beladenen Waschmittel -und die Gasströme des H2S-beladenen und des von H2S gereinigten Gases für den hier beschriebenen Beispielsfall im einzelnen dargestellt.

Das H2S-beladene Gas wird gemäß Aufgabepfeil 33 in eine Leitung 89 eingespeist, in der ein Regelventil 83 angeordnet ist und die in den Aufgaberaum 26 (Figur 1) unten im H2S-Wascher 1 einmündet. Nach dem Auswaschen des H2S im H2S-Wascher 1 gelangt das gereinigte Gas in den oben angeordneten Abzugsraum 2 (Figur 1) und daraus in eine mit einem Regelventil 80 ausgerüstete Abzugsleitung 78, die gemäß Abzugspfeil 34 zu einer Weiterverarbeitung führt. Über ein Regelventil 82 kann eine Verbindung zwischen den Leitungen 89 und 78 hergestellt werden. An die Leitung 78 ist ein QIRC-H2S-Meßgerät 76 angeschlossen, das über einen **QI**RC-FRC-Regelkreis 75 mit einem FRC-Meßgerät 63 und einer regelbaren Waschmittelpumpe 64 verbunden ist, die in eine Waschmittelleitung 62 eingebaut ist. Ein weiterer Regelkreis 67 ist zwischen dem **QI**RC-FRC-Regelkreis 75 mit dem FRC-Meßgerät 63 und der Waschmittelleitung 62 angeordnet.

Die Natronlauge wird gemäß Aufgabepfeil 35 einer Natronlaugeleitung 40 aufgegeben und von dieser in einen Natronlauge-Vorratsbehälter 37 eingespeist. Von dort wird sie von einer Natronlaugepumpe 42 über eine Natronlaugeleitung 41, in die ein Absperrventil 105 eingebaut ist, in einen Natronlauge-Weichwasser-Mischtank 38 eingetragen. Das Weichwasser gelangt aus einer mit einem Regelventil 54 ausgerüsteten Weichwasserleitung 55 in den Natronlauge-Weichwasser-Mischtank 38. An die Weichwasserleitung 55 ist ein FFRC-Meßgerät 52 angeschlossen, das über einen Regelkreis 53 mit dem Regelventil 54 verbunden ist und außerdem über einen FFRC-FIRC-Regelkreis 50 mit einem FIRC-Meßgerät 51, das an die Natronlaugeleitung 41 angeschlossen ist. In die Weichwasserleitung 55 sind Weichwasserpumpen 56a und 57a eingebunden, die gemäß Aufgabepfeil 36 aus einem Weichwassemetz gespeist werden. Aus der Weichwasserleitung 55 zweigen Weichwasserleitungen 56 und 57 ab, über die Weichwasser bei Bedarf unmittelbar in die H2S-Auswaschstufen 29 und 30 eingeleitet werden kann. In die Weichwasserleitung 56 sind ein FIRC-Meßgerät 61 und ein Regelventil 59 integriert, die über einen Regelkreis 60 verbunden sind. In der Weichwasserleitung 57 ist ein Regelventil 58 enthalten.

Aus dem Natronlauge-Weichwasser-Mischtank 38 wird Waschmitteigemisch von Waschmittelpumpen 64; 65 abgezogen und über eine mit einem Rückschlagventil 66 und einem Regelventil 70 ausgerüstete Waschmittelleitung 62 an die verschiedenen Kreisläufe aus Waschmittelgemischen abgegeben. So führt eine Waschmittelleitung 69, in die ein Regelventil 68 integriert ist, zur Waschmittelleitung 72, in der ein Absperrventil 77 enthalten ist und aus der die obere H2S-Auswaschstufe 29 mit Waschmittelgemisch beschickt wird. Eine weitere Waschmittelleitung, in die ein Regelventil 73 integriert ist, führt zur Waschmittelleitung 74, in der ein Absperrventil 81 enthalten ist und aus der die mittlere H2S-Auswaschstufe 30 mit Waschmittelgemisch beschickt wird. Eine dritte Waschmittelleitung, in die ein Regelventil 71 integriert ist, führt zur Waschmittelleitung 87, in der ein Absperrventil 86 enthalten ist und aus der die untere H2S-Auswaschstufe 31 mit Waschmittelgemisch beschickt wird. Schließlich ist zwischen den Waschmittelleitungen 87 und 74 eine Waschmittelleitung mit einem Regelventil 84 als Ausgleichsleitung vorgesehen.

Aus dem Natronlauge-Vorratsbehälter 37 ist seitlich eine Natronlaugeleitung 43 herausgeführt, in die eine Natronlaugepumpe 44, ein Regelventil 48 und ein Rückschlagventil 49 eingebaut sind. Zwischen der Natronlaugepumpe 44 und der Natronlaugeleitung 43 wird ein externer Meßkreis 45 mit einem externen PH-Wert-Meßgerät-QRCSA 46 vorgehalten, das intern an ein mit der Natronlaugeleitung 43 verbundenes FRC-Meßgerät 47 angeschlossen ist. Die Natronlaugeleitung 43 mündet in die externe Abzugsleitung für beladenes Waschmittel, Pfeil 39, ein.

Die Ströme mit den beladenen Waschmitteln aus den beiden H2S-Auswaschstufen 29 und 30 des H2S-Waschers 1 werden in eine Leitung 88 eingespeist, wobei der oberen Waschstufe 29 ein Absperrventil 79 und der mittleren Waschstufe 30 ein Absperrventil 85 nachgeschaltet ist. Die Leitung 88 mündet in eine mit einem Absperrventil 96 versehene Leitung 95 für höher belastetes Waschmittel aus der unteren Waschstufe 31 des H2S-Waschers 1 ein. Aus der Leitung 95 für höher belastetes Waschmittel kann dieses entweder über eine Pumpe 100 mit einem nachgeschaltetem Rückschlagventil 99 und einem nachgeschaltetem Regelventil 98 über Waschmittelleitung 87 in den Waschmittelkreislauf der unteren Waschstufe 31 des H2S-Waschers 1 zurückgeführt werden. Das höher belastetes Waschmittel aus der Leitung 95 kann aber auch über Pumpen 101 bzw. 103 und ein Rückschlagventil 102 in die externe Abzugsleitung für beladenes Waschmittel, Pfeil 39, ausgetragen werden. Leitung 95 ist ein LSAL-Regelkreis 97 mit einem LSAL-Meßgerät 104 zugeordnet. In der Waschmittel-Sammeistufe 32 sind ein LSAM-Meßgerät 90 und ein LSA-Meßgerät 91 über einen LSAM-LSA-Regelkreis 94 mit Waschmittelpumpe 101 sowie ein LSAL-Meßgerät 92 über einen LSAL-Regelkreis 93 mit Waschmittelpumpe 103 verbunden.

**Beispiel**

Das erfindungsgemäße Verfahren und die erfindungsgemäße Einrichtung werden in einer Kokerei erfolgreich betrieblich genutzt.

Die chemische Reaktion der Auswaschung von H2S mittels Natronlauge läuft nach folgender Gleichung ab:

$$2\ NAOH + H2S \rightarrow Na2S + 2\ H20.$$

Bei vollkommener Umsetzung ergibt sich hier ein Bedarf von
   **2,35 kg NaOH/kg H2S**

Da jedoch andere Gasinhaltsstoffe, wie z.B. CO2 und CN, diese Reaktion stören und ebenfalls Verbindungen mit der Natronlauge eingehen, kann diese Umsetzung nicht nach stöchiometrischen Gesichtspunkten ablaufen.

Gegenüber bisherigen Betriebswerten auf Kokereien ergab sich bei Einsatz des erfindungsgemäßen Verfahrens zur H2S-Abscheidung in der erfindungsgemäßen Einrichtung zur Durchführung des Verfahrens eine Reduzierung der einzusetzenden Natronlaugemenge von ca. 45 %. In dieser Betriebsanlage wurden im Dauerbetrieb Koksofengasmengen von 45.000 Nm$^3$/h im Niederdruckbereich bis auf Werte < 15 mg H2S/Nm$^3$ ausgewaschen.

**Bezugszeichenliste**

| | |
|---|---|
| 1 | H2S-Wascher |
| 2 | Abzugsraum für gereinigtes Gas |
| 3 | Tropfenabscheider |
| 4 | obere Sprüh- und Düsenebene |
| 5 | mittlere Sprüh- und Düsenebene |
| 6 | untere Sprüh- und Düsenebene |
| 7 | obere Vollkegelsprühdüse |
| 8 | mittlere Vollkegelsprühdüse |
| 9 | untere Vollkegelsprühdüse |
| 10 | obere Reaktionsstrecke |
| 11 | mittlere Reaktionsstrecke |
| 12 | untere Reaktionsstrecke |
| 13 | obere Streckmetaileinbauten |
| 14 | mittlere Streckmetalleinbauten |
| 15 | untere Streckmetalleinbauten |
| 16 | oberer Kaminabzugsboden |
| 17 | mittlerer Kaminabzugsboden |
| 18 | oberer Waschmittelabzug |
| 19 | mittlerer Waschmitteiabzug |
| 20 | unterer Waschmittelabzug |
| 21 | Aufgabepfeil für H2S-beiadenes Gas |
| 22 | Abzugspfeil für gereinigtes Gas |
| 23 | Pfeil fiir obere Waschmittel-Aufgabe |
| 24 | Pfeil für mittlere Waschmittel-Aufgabe |
| 25 | Pfeil für untere Waschmittel-Aufgabe |
| 26 | Aufgaberaum für H2S-beladenes Gas |
| 27 | Waschmittel-Sammeikammer |
| 28 | Entwässerungsstufe |
| 29 | obere H2S-Auswaschstufe |
| 30 | mittlere H2S-Auswaschstufe |
| 31 | untere H2S-Auswaschstufe |
| 32 | Waschmittel-Sammelstufe |
| 33 | Aufgabepfeil für H2S-beiadenes Gas |
| 34 | Abzugspfeil für gereinigtes Gas |
| 35 | Aufgabepfeil für Natronlauge |
| 36 | Aufgabepfeil für Weichwasser |
| 37 | Natranlauge-Vorratsbehälter |
| 38 | N atronlauge-Weichwasser-Mischtank |
| 39 | Pfeil für beladenes Waschmittel |

| | |
|---|---|
| 40 | Natronlaugeleitung |
| 41 | Natronlaugeleitung |
| 42 | Natronlaugepumpe |
| 43 | Natronlaugeleitung |
| 44 | Natronlaugepumpe |
| 45 | externer Meßkreis |
| 46 | PH-Wert-Meßgerät QRCSA |
| 47 | FRC-Meßgerät |
| 48 | Regeiventil |
| 49 | Rückschlagventil |
| 50 | FFRC-FIRC-Regelkreis |
| 51 | FIRC-Meßgerät |
| 52 | FFRC-Meßgerät |
| 53 | Regelkreis |
| 54 | Regelventil |
| 55 | Weichwasserleitung |
| 56 | Weichwasserleitung |
| 56a | Weichwasserpumpe |
| 57 | Weichwasserleitung |
| 57a | Weichwasserpumpe |
| 58 | Regelventil |
| 59 | Regelventil |
| 60 | Regelkreis |
| 61 | FIRC-Meßgerät |
| 62 | Waschmittelleitung |
| 63 | FRC-Meßgerät |
| 64 | Waschmittelpumpe |
| 65 | Waschmittelpumpe |
| 66 | Rückschlagventil |
| 67 | Regelkreis |
| 68 | Regelventil |
| 69 | Waschmittelleitung |
| 70 | Regelventil |
| 71 | Regelventil |
| 72 | Waschmittelleitung |
| 73 | Regelventil |
| 74 | Waschmittelleitung |
| 75 | QIRC-FRC-Regelkreis |
| 76 | QIRC-H2S-Meßgerät |
| 77 | Absperrventil |
| 78 | Abzugsleitung für gereinigtes Gas |
| 79 | Absperrventil |
| 80 | Regelventil |
| 81 | Absperrventil |
| 82 | Regelventil |
| 83 | Regelventil |
| 84 | Regelventil |
| 85 | Absperrventil |
| 86 | Absperrventil |
| 87 | Waschmittelleitung |
| 88 | Leitung für beladenes Waschmittel |
| 89 | Leitung für H2S-beladenes Gas |
| 90 | LSAM-Meßgerät |
| 91 | LSA-Meßgerät |
| 92 | LSAL-Meßgerät |
| 93 | LSAL-Regelkreis |
| 94 | LSAM-LSA-Regelkreis |
| 95 | Leitung für beladenes Waschmittel |

| | |
|---|---|
| 96, | Absperrventil |
| 97 | LSAL-Regelkreis |
| 98 | Regelventil |
| 99 | Rückschlagventil |
| 100 | Pumpe für beladenes Waschmittel |
| 101 | Pumpe für beladenes Waschmittel |
| 102 | Rückschlagventil |
| 103 | Pumpe für beladenes Waschmittel |
| 104 | LSAL-Meßgerät |
| 105 | Absperrventil |

**Patentansprüche**

1.  Verfahren zur H2S-Abscheidung aus einem H2S-haltigen Gas, wobei Natronlauge im Gegenstrom zum H2S-haltigen Gas einem H2S-Wascher als Waschmittel aufgegeben wird, wobei das Waschmittelgemisch in unterschiedlichen Konzentrationen in mehrere übereinander angeordnete, Reaktionsstrecken (10, 11, 12) des H2S-Waschers (1) jeweils seitlich eingeführt, von oben eingedüst und chemisch umgesetzt wird und unterhalb jeder Reaktionsstrecke (10, 11, 12) mit H2S beladenes Waschmittel mit jeweils unterschiedlicher Konzentration aufgefangen und seitlich abgezogen wird, und wobei das Waschmittel mit niedriger und mittlerer H2S-Anreicherung mehrfach in den Kreislauf zurückgeführt wird, **dadurch gekennzeichnet, daß** die Natronlauge mit Weichwasser gemischt wird, daß im oberen . Teil der Reaktionsstrecken (10; 11; 12) Sprüh- und Düsenebenen (4; 5; 6) mit Vollkegelsprühdüsen (7; 8; 9) angeordnet sind und im unteren Teil leicht benetzbare Streckmetalleinbauten (13; 14; 15) angebracht sind und daß das Waschmittel mit hoher H2S-Anreicherung an eine nachgeschaltete Destillationseinrichtung abgegeben wird.

2.  Verfahren zur H2S-Abscheidung nach Anspruch 1, **dadurch gekennzeichnet, daß** das H2S aus Koksofengas abgeschieden wird.

3.  Verfahren zur H2S-Abscheidung nach Anspruch 1 oder 2, **dadurch gekennzeichnet, daß** das Waschmittelgemisch dem H2S-Wascher (1) aus einem Natronlauge-Weichwasser-Mischtank (38) zugeführt wird, der aus einem Natronlauge-Vorratsbehälter (37) mit der Natronlauge und aus einer Weichwasser-Leitung (55) mit dem Weichwasser beschickt wird.

4.  Verfahren zur H2S-Abscheidung, nach Anspruch 1, 2 oder 3 **dadurch gekennzeichnet, daß** der H2S-Wascher (1) über Weichwasser-Leitungen (56; 57) unmittelbar mit Weichwasser beschickt wird.

5.  Verfahren zur H2S-Abscheidung nach einem oder mehreren der Ansprüche 1 bis 4, **dadurch gekennzeichnet, daß** das gereinigte Gas in einer oben im H2S-Wascher (1) oberhalb der oberen Rektionsstrecke (10) angeordneten Entwässerungsstufe (28) von mitgerissenen Flüssigkeitstropfen befreit wird.

6. Verfahren zur H2S-Abscheidung nach einem oder mehreren der Ansprüche 1 bis 5, **dadurch gekennzeichnet, daß** das hoch mit H2S beladene Waschmittel in einer unten im H2S-Wascher (1) unterhalb der Reaktionsstrecke (12) angeordneten Waschmittel-Sammelstufe (32) mit Waschmittel-Sammelkammer(27) umgewälzt und angereichert wird.

7. Verfahren zur H2S-Abscheidung nach einem oder mehreren der Ansprüche 1 bis 6, **dadurch gekennzeichnet, daß** das beladene Waschmittel aus den Reaktionsstrecken (10; 11) über nachgeschaltete gasdurchlässige Kaminabzugsböden (16; 17) aus dem H2S-Wascher (1) abgezogen und in den Kreislauf zurückgeführt wird.

8. Verfahren zur H2S-Abscheidung nach einem oder mehreren der Ansprüche 1 bis 7, **dadurch gekennzeichnet, daß** die Flüssigkeitsströme der Natronlauge, des Weichwassers und der Natronlaugen-Weichwasser-Gemische sowie der beladenen Waschmittel und die Gasströme der H2S-beladenen und der von H2S gereinigten Gase mittels Meßgeräten (46, 47, 51, 52, 61, 63, 76, 90, 91, 92, 104) nach Mengen, Eigenschaften und Zusammensetzungen ermittelt werden und je nach Befund über Regelkreise (50, 53, 60, 67, 75, 93, 94, 97), Armaturen (48, 49, 54, 58, 59, 66, 68, 70, 71, 73, 77, 79, 80, 81, 82, 83, 84, 85, 86, 96, 98, 99, 102, 105), Pumpen (42, 44, 56a, 57a, 64, 65, 100, 101, 103) und Leitungen (40, 41, 43, 55, 56, 57, 62, 69, 72, 74, 78, 87, 88, 89, 95) in die Gas- bzw. Waschmittel-Ströme oder - Kreisläufe eingeschleust bzw. zurückgeführt oder daraus ausgeschleust werden.

9. Einrichtung zur H2S-Abscheidung aus einem H2S-haltigen Gas, wobei Natronlauge im Gegenstrom zum H2S-haltigen Gas einem H2S-Wascher als Waschmedium aufgegeben wird, nach einem oder mehreren der Ansprüche 1 bis 8, wobei der H2S-Wascher (1) aus mehreren übereinander angeordneten Reaktionsstrecken (10, 11, 12) besteht, in die die Waschmittel jeweils seitlich eingeführt und von oben eingedüst und chemisch mit dem H2S-haltigen Gasen umgesetzt werden, **dadurch gekennzeichnet, daß** dem H2S-Wascher (1) zur Zuführung von Natronlauge, Weichwasser oder Natronlauge-Weichwasser-Gemischen ein Natronlauge-Weichwasser-Mischtank (38) und letzterem ein Na-tronlaugevorratsbehälter (37) sowie eine Weich-wasser-Leitung (55) vorgeschaltet sind, und unterhalb der Reaktionsstrecken (10, 11) gasdurchlässige Kaminabzugsböden (16, 17) zum Abziehen der H2S-beladenen Waschmittel angeordnet sind, im H2S-Wascher (1) oberhalb der Reaktionsstrecke (10) ein Tropfenabscheider (3) als Entwässerungsstufe (28) vorgeschaltet ist und unterhalb der Reaktionsstrecke (12) eine Waschmittel-Sammelstufe (32) mit einer WaschmittesSammelkammer (27) nachgeschaltet ist, und daß im oberen Teil der Reaktionsstrecken (10, 11, 12) Sprüh-und Düseneb-nen (4, 5, 6) mit Vollkegelsprühdüsen (7, 8, 9) für die Waschmittelverteilung angeordnet sind und im unteren Teil leicht benetzbare Streckmetalleinbauten (13, 14, 15) angebracht sind.

10. Einrichtung zur H2S-Abscheidung nach Anspruch 9, **dadurch gekennzeichnet, daß** in den Flüssigkeitsströmen der Natronlauge, des Weichwassers und der Natronlaugen-Weichwasser-Gemische sowie der beladenen Waschmittel und in den Gasströmen der H2S-beladenen und der von H2S gereinigten Gase Meßgeräte (46, 47, 51, 52, 61, 63, 76, 90, 91, 92, 104) angeordnet sind, um Mengen, Eigenschaften und Zusammensetzungen zu ermitteln.

11. Einrichtung zur H2S-Abscheidung nach Anspruch 10, **dadurch gekennzeichnet, daß** in den Flüssigkeitsströmen der Natronlauge, des Weichwassers und' der Natronlaugen-Weichwasser-Gemische sowie der beladenen Waschmittel und in den Gasströmen der H2S-beladenen und der von H2S gereinigten Gase Regelkreise (50, 53, 60, 67, 75, 93, 94, 97), Armaturen (48, 49, 54, 58, 59, 66, 68, 70, 71, 73, 77, 79, 80, 81, 82, 83, 84, 85, 86, 96, 98, 99, 102, 105), Pumpen (42, 44, 56a, 57a, 64, 65, 100, 101, 103) und Leitungen (40, 41, 43, 55, 56, 57, 62, 69, 72, 74, 78, 87, 88, 89, 95) vorgesehen sind, um die Gas- bzw. Waschmittel-Ströme oder -Kreisläufe zu regeln und aufzuteilen sowie zu transportieren.

**Claims**

1. Method of separating $H_2S$ from an $H_2S$-containing gas in which caustic soda solution is supplied in countercurrent to the $H_2S$-containing gas to an $H_2S$ washer as a washing agent, whereby the washing agent mixture is introduced laterally in different concentrations into a plurality of reaction paths (10, 11, 12), arranged above one another, of the $H_2S$ wash-er, is injected in from above and chemically converted and below each reaction path (10, 11, 12) wash-ing agent loaded with $H_2S$ with differing concentra-tions is collected and laterally withdrawn and whereby the washing agent with low and average $H_2S$ concentration is fed back into the circuit a number of times, **characterised in that** the caustic soda solution is mixed with soft water, that arranged in the upper portion of the reaction paths (10; 11; 12) there are spray and nozzle planes (4; 5; 6) with full conical spray nozzles (7; 8; 9) and mounted in the lower portion are readily wettable components (13; 14; 15) and that the washing agent with a higher $H_2S$ concentration is discharged to a downstream distillation device.

2. Method of separating $H_2S$ as claimed in Claim 1, **characterised in that** the $H_2S$ is separated from coke oven gas.

3. Method of separating $H_2S$ as claimed in Claim 1 or 2, **characterised in that** the washing agent mixture is supplied to the $H_2S$ washer (1) from a caustic soda solution-soft water mixing tank (38), which is charged with the caustic soda solution from a caustic soda solution supply container (37) and with the soft water from a soft water conduit (55).

4. Method of separating $H_2S$ as claimed in Claim 1, 2 or 3, **characterised in that** the $H_2S$ washer (1) is charged directly with soft water via soft water conduits (56; 57).

5. Method of separating $H_2S$ as claimed in one or more of Claims 1 to 4, **characterised in that** the purified gas is liberated of entrained liquid droplets in a dewatering stage (28) arranged at the top of the $H_2S$ washer (1) above the upper reaction path (10).

6. Method of separating $H_2S$ as claimed in one or more of Claims 1 to 5, **characterised in that** the washing agent highly charged with $H_2S$ is circulated and concentrated in a washing agent collecting stage (32) with a washing agent collecting chamber (27) arranged at the bottom of the $H_2S$ washer (1) below the reaction path (12).

7. Method of separating $H_2S$ as claimed in one or more of Claims 1 to 6, **characterised in that** the loaded washing agent is withdrawn from the $H_2S$ washer (1) out of the reaction paths (10; 11) via downstream, gas permeable stack drain plates (16; 17) and fed back into the circuit.

8. Method of $H_2S$ separation as claimed in one or more of Claims 1 to 7, **characterised in that** the liquid flows of the caustic soda solution, the soft water and the caustic soda solution-soft water mixtures and the loaded washing agent and the gas flows of the $H_2S$-charged gases and the gases purified of $H_2S$ are measured by means of measuring devices (46, 47, 51, 52, 61, 63, 76, 90, 91, 92, 104) as regards volumes, properties and compositions and, depending on the result, are fed into or fed back to the gas or washing agent flows or circuits or discharged therefrom by means of control circuits (50, 53, 60, 67, 75, 93, 94, 97), valves (48, 49, 54, 58, 59, 66, 68, 70, 71, 73, 77, 79, 80, 81, 82, 83, 84, 85, 86, 96, 98, 99, 102, 105), pumps (42, 44, 56a, 57a, 64, 65, 100, 101, 103) and conduits (40, 41, 43, 55, 56, 57, 62, 69, 72, 74, 78, 87, 88, 89, 95).

9. Device for separating $H_2S$ from an $H_2S$-containing gas in which caustic soda solution is supplied in countercurrent to the $H_2S$-containing gas to an $H_2S$ washer as a washing agent, as claimed in one or more of Claims 1 to 8, whereby the $H_2S$ washer (1) comprises a plurality of reaction paths (10, 11, 12), which are arranged above one another and into which the washing agent is introduced laterally and is injected in from above and is chemically converted with the $H_2S$-containing gases, **characterised in that** connected upstream of the $H_2S$ washer (1) for supplying caustic soda solution, soft water or caustic soda solution-soft water mixtures there is a caustic soda solution-soft water mixing tank (38) and upstream of the latter there are a caustic soda solution supply container (37) and a soft water conduit (55) and arranged below the reaction paths (10, 11) there are gas permeable stack drain plates (16, 17) for withdrawing the $H_2S$-loaded washing agent, connected upstream in the $H_2S$ washer (1) above the reaction path (10) there is a drop separator (3) constituting a dewatering stage (28) and connected downstream below the reaction path (12) there is a washing agent collecting stage (32) with a washing agent collecting chamber (27) and that arranged in the upper portion of the reaction paths (10, 11, 12) there are spray and nozzle planes (4, 5, 6) with full conical spray nozzles (7, 8, 9) for distributing the washing agent and mounted in the lower portion there are readily wettable expanded metal components (13, 14, 15).

10. Device for $H_2S$ separation as claimed in Claim 9, **characterised in that** arranged in the liquid flows of the caustic soda solution, the soft water and the caustic soda solution-soft water mixtures and the loaded washing agent and in the gas flows of the $H_2S$-loaded gases and the gases cleaned of $H_2S$ there are measuring devices (46, 47, 51, 52, 61, 63, 76, 90, 91, 92, 104) to determine amounts, properties and compositions.

11. Device for $H_2S$ separation as claimed in Claim 10, **characterised in that** provided in the liquid flows of the caustic soda solution, the soft water and the caustic soda solution-soft water mixtures, and of the loaded washing agent and in the gas flows of the gases loaded with $H_2S$ and the gases cleaned of $H_2S$ there are control circuits (50, 53, 60, 67, 75, 93, 94, 97), valves (48, 49, 54, 58, 59, 66, 68, 70, 71, 73, 77, 79, 80, 81, 82, 83, 84, 85, 86, 96, 98, 99, 102, 105), pumps (42, 44, 56a, 57a, 64, 65, 100, 101, 103) and conduits (40, 41, 43, 55, 56, 57, 62, 69, 72, 74, 78, 87, 88, 89, 95) in order to control and distribute and to transport the gas and washing agent flows or circuits.

## Revendications

1. Procédé pour la séparation de $H_2S$ d'un gaz contenant du $H_2S$, dans lequel de la lessive de soude est introduite en tant qu'agent de lavage à contre-courant du gaz contenant du $H_2S$ dans un laveur de $H_2S$, tandis que le mélange d'agent de lavage est introduit dans des concentrations différentes dans plusieurs zones de réaction du laveur de $H_2S$ (1) disposées l'une au-dessus de l'autre (10, 11, 12), à chaque fois latéralement, est injecté par le haut et est mis à réagir chimiquement, et en dessous de chaque zone de réaction (10, 11, 12) l'agent de lavage chargé de $H_2S$ est recueilli et soutiré latéralement avec une concentration à chaque fois différente, et tandis que l'agent de lavage ayant un enrichissement faible et moyen en $H_2S$ est recyclé plusieurs fois, **caractérisé en ce que** la lessive de soude est mélangée avec de l'eau douce, que dans la partie supérieure des zones de réaction (10; 11; 12) sont disposés des niveaux de pulvérisation et d'injection (4; 5; 6) avec des buses de pulvérisation à cône plein (7; 8; 9) et dans la partie inférieure sont disposées des structures internes en métal déployé, facilement mouillables (13; 14; 15) et que l'agent de lavage ayant un enrichissement élevé en $H_2S$ est envoyé dans une installation de distillation intercalée à la suite.

2. Procédé pour la séparation de $H_2S$ selon la revendication 1, **caractérisé en ce que** le $H_2S$ est séparé à partir de gaz de four à coke.

3. Procédé pour la séparation de $H_2S$ selon la revendication 1 ou 2, **caractérisé en ce que** le mélange d'agent de lavage est envoyé dans le laveur de $H_2S$ (1) partir d'un réservoir de mélange de lessive de soude-eau douce (38), qui est chargé avec la lessive de soude à partir d'un réservoir de stockage de lessive de soude (37) et avec l'eau douce à partir d'une conduite d'eau douce (55).

4. Procédé pour la séparation de $H_2S$ selon la revendication 1, 2 ou 3, **caractérisé en ce que** le laveur de $H_2S$ (1) est rempli directement avec de l'eau douce par l'intermédiaire de conduites d'eau douce (56; 57).

5. Procédé pour la séparation de $H_2S$ selon l'une ou plusieurs des revendications 1 à 4, **caractérisé en ce que** le gaz purifié est libéré des gouttes de liquide entraînées dans une étape de déshydratation (28) disposée dans le haut du laveur de $H_2S$ (1) au-dessus de la zone de réaction supérieure (10).

6. Procédé pour la séparation de $H_2S$ selon l'une ou plusieurs des revendications 1 à 5, **caractérisé en ce que** l'agent laveur fortement chargé en $H_2S$ est mis à circuler et concentré avec le collecteur d'agent de lavage (27) dans une étape de recueil d'agent de lavage (32) disposée en dessous de la zone de réaction (12).

7. Procédé pour la séparation de $H_2S$ selon l'une ou plusieurs des revendications 1 à 6, **caractérisé en ce que** l'agent de lavage chargé est soutiré du laveur de $H_2S$ (1) à partir des zones de réaction (10; 11), par l'intermédiaire de planchers d'évacuation à cheminée (16; 17) perméables aux gaz, intercalés à la suite et est recyclé.

8. Procédé pour la séparation de $H_2S$ selon l'une ou plusieurs des revendications 1 à 7, **caractérisé en ce que** les courants liquides de la lessive de soude, de l'eau douce et des mélanges de lessives de soude-eau douce, ainsi que l'agent de lavage chargé et les courants gazeux des gaz chargés de $H_2S$ et des gaz purifiés du $H_2S$ sont déterminés au moyen d'appareils de mesure (46, 47, 51, 52,61,63,76,90, 91,92,104) en ce qui concerne les quantités, les propriétés et les compositions, et en fonction des résultats sont respectivement envoyés, par l'intermédiaire de circuits régulateurs (50, 53, 60, 67, 75, 93, 94, 97), de robinetteries (48, 49, 54, 58, 59, 66, 68, 70, 71, 73, 77, 79, 80, 81, 82, 83, 84, 85, 86, 96, 98, 99, 102, 105), de pompes (42, 44, 56a, 57a, 64, 65, 100, 101, 103) et de conduites (40,41,43; 55, 56, 57, 62, 69, 72, 74, 78, 87, 88, 89, 95) dans les courants ou les circuits de gaz ou d'agent de lavage, ou recyclés ou évacués au dehors.

9. Installation pour la séparation de $H_2S$ d'un gaz contenant du $H_2S$, dans laquelle de la lessive de soude est introduite en tant que moyen de lavage, selon l'une ou plusieurs des revendications 1 à 8, tandis que le laveur de $H_2S$ (1) consiste en plusieurs zones de réaction (10, 11, 12) disposées l'une à la suite de l'autre, dans lesquelles l'agent de lavage est introduit à chaque fois latéralement et est pulvérisé par le haut et mis à réagir chimiquement avec le gaz contenant du $H_2S$, **caractérisée en ce que** sont intercalés préalablement au laveur de $H_2S$ (1) pour l'introduction de lessive de soude, d'eau douce ou de mélanges de lessive de soude-eau douce, un réservoir de mélange de lessive de soude-eau douce (38) et en dernier un récipient de stockage de lessive de soude (37), ainsi qu'une conduite d'eau douce (55), et en dessous des zones de réaction (10, 11) sont disposés des planchers d'évacuation à cheminée (16, 17) pour l'extraction de l'agent de

lavage chargé de $H_2S$, dans le laveur de $H_2S$ (1) est intercalé préalablement au-dessus de la zone de réaction (10) un séparateur de gouttes (3) faisant office de stade de déshydratation (28) et en dessous de la zone de réaction (12) un stade de recueil d'agent de lavage (32) avec un collecteur d'agent de lavage (27), et que dans la partie supérieure des zones de réaction (10, 11,12) sont disposés des niveaux de pulvérisation et d'injection (4,5,6) avec des buses de pulvérisation à cône plein (7, 8, 9) pour la distribution de l'agent de lavage et dans la partie inférieure sont disposées des structures internes en métal déployé, facilement mouillables (13,14,15).

**10.** Installation pour la séparation de $H_2S$ selon la revendication 9, **caractérisée en ce que** dans les courants liquides de la lessive de soude, de l'eau douce et des mélanges de lessives de soude-eau douce, ainsi que de l'agent de lavage chargé, et dans les courants gazeux des gaz chargés de $H_2S$ et des gaz purifiés du $H_2S$ sont disposés des appareils de mesure (46, 47, 51, 52, 61, 63, 76, 90, 91, 92, 104), pour la détermination des quantités, des propriétés et des compositions.

**11.** Installation pour la séparation de $H_2S$ selon la revendication 10, **caractérisée en ce que** dans les courants liquides de la lessive de soude, de l'eau douce et des mélanges de lessives de soude-eau douce, ainsi que de l'agent de lavage chargé, et dans les courants gazeux des gaz chargés de $H_2S$ et des gaz purifiés du $H_2S$ sont prévus des circuits régulateurs (50,53,60,67,75,93,94,97), des robinetteries (48,49,54,58, 59, 66, 68, 70, 71, 73, 77, 79, 80, 81, 82, 83, 84, 85, 86, 96, 98, 99, 102, 105), des pompes (42, 44, 56a, 57a, 64, 65, 100, 101, 103) et des conduites (40, 41, 43, 55, 56, 57, 62, 69, 72, 74, 78, 87, 88, 89, 95), pour réguler et répartir, ainsi que pour transporter les courants ou les circuits respectivement de gaz ou d'agent de lavage.

*Fig. 1*

*Fig. 2*